(19) Europäisches Patentamt
European Patent Office
Office européen des brevets

(11) Veröffentlichungsnummer : **0 321 443 B1**

(12)

# EUROPÄISCHE PATENTSCHRIFT

(45) Veröffentlichungstag der Patentschrift :
06.05.92 Patentblatt 92/19

(51) Int. Cl.[5] : **C21C 5/56,** C22B 7/00

(21) Anmeldenummer : 88890316.8

(22) Anmeldetag : 14.12.88

(54) **Verfahren zum kontinuierlichen Schmelzen von Schrott sowie Vorrichtung zur Durchführung dieses Verfahrens.**

(30) Priorität : 17.12.87 AT 3341/87

(43) Veröffentlichungstag der Anmeldung :
21.06.89 Patentblatt 89/25

(45) Bekanntmachung des Hinweises auf die
Patenterteilung :
06.05.92 Patentblatt 92/19

(84) Benannte Vertragsstaaten :
AT BE CH DE ES FR GB GR IT LI LU NL SE

(56) Entgegenhaltungen :
EP-A- 0 240 485
BE-A- 720 470
DE-A- 3 531 261
GB-A- 2 039 349
GB-A- 2 095 701
PATENT ABSTRACTS OF JAPAN, Band 11, Nr.
63 (C-406)[2510], 26. Februar 1987; & JP-A-61
221 322 (KAWASAKI HEAVY IND., LTD)01-
10-1986
PATENT ABSTRACTS OF JAPAN, Band 2, Nr.
72 (C-78)[789], 31. Mai 1978, Seite 789 C 78; &
JP-A-53 28 510 (SHIN NIPPONSEITETSU K.K.)
16-03-1978

(73) Patentinhaber : **VOEST-ALPINE STAHL
Donawitz GmbH
Kerpelystrasse 199
A-8700 Leoben-Donawitz (AT)**

(72) Erfinder : **Von Bogdandy, Ludwig, Prof. Dr.-Ing.
Dr.-Ing. E.h.
Jungmairstrasse 8
A-4020 Linz (AT)**
Erfinder : **Köller, Otto, Dipl. Ing.
Kerpelystrasse 83
A-8700 Leoben (AT)**
Erfinder : **Mitter, Gerhard, Prof. Dir. Dipl. Ing.
Nelkengasse 15
A-5020 Traun (AT)**
Erfinder : **Pochmarski, Luzian, Dipl. Ing.
Roseggerstrasse 27
A-8700 Leoben (AT)**

(74) Vertreter : **Haffner, Thomas M., Dr. et al
Patentanwaltskanzlei Dipl.-Ing. Adolf
Kretschmer Dr. Thomas M. Haffner
Schottengasse 3a
A-1014 Wien (AT)**

## Beschreibung

Die Erfindung bezieht sich auf ein Verfahren zum kontinuierlichen Schmelzen von Schrott und/oder Roheisen in einem Konverter, wobei der Konverter nahe dem Boden mit unterstöchiometrischen betriebenen Brennern, deren Flammen im wesentlichen radial in das Innere des Konverters gerichtet sind, beheizt wird und wobei die Schmelze über eine seitlich an den Konverter angeschlossene Absticheinrichtung gegebenenfalls gemeinsam mit Schlacke ausgetragen wird, sowie auf eine Vorrichtung zur Durchführung dieses Verfahrens mit einem Konverter, wobei an den Konverter in einer Ebene nahe dem Konverterboden eine Mehrzahl von im wesentlichen radial gerichteten Brennerdüsen angeordnet ist.

Es sind bereits allotherme Konverterverfahren bekannt, mit welchen Schrott vorgewärmt und/oder geschmolzen wird, wobei derartige Verfahren gegebenenfalls mit Roheisenzugabe durchgeführt werden. Für die Durchführung derartiger Verfahren sind aufwendige kippbare Öfen vorgeschlagen worden, wobei ein wesentlicher Nachteil der bekannten Verfahren darin zu erblicken ist, daß sie chargenweise arbeiten, da der Tiegel keinerlei Vorrichtungen zum kontinuierlichen Ablauf geschmolzenen Gutes aufweist.

Die Beheizung der bekannten allothermen Öfen für die Vorwärmung von Schrott und/oder der Schmelzen erfolgt üblicherweise durch Bodendüsen, die Kohlenstoff-Sauerstoff-Gemische in den Bodensumpf einblasen oder durch Einblasen von Brennstoffen mit Sauerstoff über eine von oben eingeführte Lanze.

Aus der JP-A-53 28 510 sind ein Verfahren und eine Vorrichtung der eingangs genannten Art bekanntgeworden. Es wird dabei ein Verfahren zur kontinuierlichen Herstellung von geschmolzenem Metall offenbart, wobei der Konverter nahe dem Boden mit unterstöchiometrischen Brennern, deren Flammen im wesentlichen radial in das Innere des Konverters gerichtet sind, beheizt wird. In dem bekannten Verfahren wird weiters die Schmelze über eine seitlich an den Konverter angeschlossene Absticheinrichtung gemeinsam mit Schlacke ausgetragen.

Das weiters bekannte sogenannte KVA-Verfahren wird mit metallischem Einsatz sowie Kohle und Zuschlägen betrieben, wobei es bei diesem KVA-Verfahren bekannt ist, die erforderliche Schmelzwärme durch Erdgas-Sauerstoff-Brenner aufzubringen. Die bisher im Rahmen des KVA-Verfahrens vorgeschlagenen Schmelztiegel weisen einen Bodenabstich auf, mit welchem ein kontinuierliches Arbeiten nicht ohne weiteres möglich ist. Es war auch bei diesen bekannten Verfahren bereits möglich, fahrbare Pfannen unter die Abstichöffnung zu bewegen, wobei gemeinsam mit dem geschmolzenen Bad auch die Schlacke ausgebracht wurde und das Abschlacken aus der nachfolgenden Pfanne vorgenommen wurde. Auf Grund des Bodenablasses konnte selbst bei einer kippbaren Ausführung des Schmelztiegels nur eine geringe Menge einer Schlacke im Schmelzgefäß bzw. Schmelztiegel zurückgehalten werden, so daß bei der kontinuierlichen Weiterführung des Schmelzprozesses zunächst erst wieder eine entsprechende Schlackenmenge zur Erzielung einer gleichbleibenden Qualität aufgebaut werden mußte.

Die Erfindung zielt nun darauf ab, ein Verfahren der eingangs genannten Art zu schaffen, mit welchem es möglich ist, den Schmelzprozeß kontinuierlich und mit konstanter Qualität des Bades zu führen. Zur Lösung dieser Aufgabe besteht das erfindungsgemäße Verfahren im wesentlichen darin, daß in Abstand oberhalb der Brennerebene Sekundärluft oder $O_2$ zur vollständigen Verbrennung zugeführt wird, und daß der Konverter zum Wechsel von fahrbaren Pfannen, in welche die Schmelze ausgetragen wird, in eine Lage verschwenkt wird, in welcher der Schmelzespiegel unterhalb der Abstichöffnung liegt. Da der Konverter nahe dem Boden mit unterstöchiometrischen Brennern, deren Flammen im wesentlichen radial in das Innere des Konverters gerichtet sind, beheizt wird, läßt sich insbesondere bei Verwendung von Erdgas-Sauerstoff-Brennern das Erdgas-Sauerstoff-Verhältnis in einer Weise regeln, daß die gewünschten Flammtemperaturen und der gewünschte Oxidationsgrad erzielt wird. Die Verwendung unterstöchiometrischer Brenner führt hiebei zu einer Verbesserung des Eisenausbringens und zu einer Verringerung des Oxidationsverlustes. Dadurch, daß nun in Abstand oberhalb der Brennerebene Sekundärluft oder Sauerstoff zur vollständigen Verbrennung zugeführt wird, wird die chemisch gebundene Wärme weitgehend vollständig ausgenützt und die kontinuierlich zugesetzte Charge in hohem Made vorgewärmt, so daß das Verfahren beschleunigt wird. In diesen Nachverbrennungsdüsen wird der unverbrannte Brennstoffanteil mit Hilfe von regelbaren Luftmengen möglichst vollständig nachverbrannt und auf diese Weise die Schrottsäule vorgeheizt. Da die Schmelze über eine seitlich an den Konverter angeschlossene Absticheinrichtung gegebenenfalls gemeinsam mit Schlacke in eine fahrbare Pfanne ausgetragen wird, wird die Möglichkeit geschaffen, bei einem Verschwenken des Konverters eine hinreichende Menge einer Schlacke im Konverter zurückzuhalten, so daß der kontinuierliche Schmelzprozeß nach dem Rückschwenken des Konverters nach dem Austausch der darunter bewegten Pfanne in keiner Weise beeinträchtigt wird. Eine gegebenenfalls mit dem Schmelzbad ausgetragene Schlacke kann durch Separation derselben bei der darunter stehenden Auffangpfanne abgetrennt werden, wobei die seitlich vorragende Absticheinrichtung bereits bei geringen Schwenkwinkeln ein hinreichendes Volumen der Schlacke im Konverter zurückzuhalten gestattet. Auch während des Pfannenwechsels kann das weiter aufschmelzende metallische Gut im Konverter zurückgehalten werden, so daß die Kontinuität des Verfahrens aufrechterhalten wird, wozu es lediglich genügt, den Konverter zum Pfannenwechsel in eine Lage zu verschwenken, in welcher der Schmelzespiegel unterhalb der Abstichöffnung liegt.

Die erfindungsgemäße Vorrichtung zur Durchführung dieses Verfahrens weist einen Konverter auf, wobei an den Konverter in einer Ebene nahe dem Konverterboden eine Mehrzahl von im wesentlichen radial gerichteten Brennerdüsen angeordnet ist, und ist im wesentlichen dadurch gekennzeichnet, daß in einer weiteren, darüber liegenden Ebene Luftdüsen angeordnet sind und daß an den Konverter über eine radiale Abstichöffnung eine erkerförmige Absticheinrichtung angeschlossen ist. Von wesentlicher Bedeutung für die erfindungsgemäße Einrichtung ist hiebei die an den Konverter über eine radiale Abstichöffnung angeschlossene erkerförmige Absticheinrichtung, welche die Kinematik des Schwenkvorganges dahingehend verbessert, daß auch bei geringen Schwenkwinkeln des Konverters ein Pfannenwechsel ohne Nachtropfen möglich wird. Mit Vorteil ist diese Ausbildung so weitergebildet, daß die erkerförmige Absticheinrichtung einen im wesentlichen radialen Kanal aufweist, welcher mit der radialen Abstichöffnung des Konverters fluchtet und daß an den im wesentlichen radialen Kanal ein zur Achse des Konverters im wesentlichen paralleler Abstichkanal angeschlossen ist, wobei eine derartige abgewinkelte Ausführung der Kanäle in der Absticheinrichtung die Möglichkeit bietet, mit geringen Schwenkwinkeln für den Pfannenwechsel das Auslangen zu finden und die Möglichkeit schafft, Zusatzeinrichtungen anzuordnen, welche die Kontinuität des Verfahrens gewährleisten. Hiezu zählt in erster Linie die bevorzugte Weiterbildung gemäß welcher die erkerförmige Absticheinrichtung wenigstens einen Brenner aufweist, dessen Flamme in jeweils einen der beiden Kanäle der Absticheinrichtung mündet. Derartige Brenner, welche an die erkerförmige Absticheinrichtung angeschlossen sind, verhindern, daß in der Phase des Pfannenwechsels eine Erstarrung des Schmelzbades in den Kanälen der erkerförmigen Absticheinrichtung auftritt, welche zu einer Unterbrechung des kontinuierlichen Verfahrens führen könnte. Mit Vorteil sind hiebei in jeden der beiden Kanäle, nämlich sowohl in den mit der radialen Abstichöffnung des Konverters fluchtenden im wesentlichen radialen Kanal als auch in den gegenüber diesen ersten Kanal abgewinkelten weiteren Kanal Brenner gerichtet, wodurch eine homogene Temperaturverteilung sichergestellt ist.

Mit Vorteil ist die erfindungsgemäße Ausbildung hiebei so getroffen, daß der an die radiale Abstichöffnung angeschlossene Kanal der Absticheinrichtung einen größeren lichten Querschnitt aufweist als der zur Achse des Konverters parallele Kanal der Absticheinrichtung, wodurch die Möglichkeit geschaffen wird, die Brenner an einen von Schmelze freien Raum des im wesentlichen radialen ersten Kanales anzuschließen. Die Brennerdüsen können hiebei von einer unmittelbaren Beaufschlagung mit dem Schmelzbad freigehalten werden und die Ausbildung ist hiebei in besonders einfacher Weise so getroffen, daß an den an die radiale Abstichöffnung angeschlossenen Kanal der Absticheinrichtung zwei Brenner mit einander kreuzenden oder schneidenden Flammachsen und eine verschließbare Probenahmeöffnung angeschlossen sind. Der zusätzlich in diesen Kanal mündende Anschluß für die Probenahme ermöglicht die kontinuierliche Überwachung des Verfahrens und erlaubt es, die Brenner des Konverters in entsprechend gewünschter Weise zu regeln.

Ein besonders rascher Wechsel der verfahrbaren Pfannen gelingt dann, wenn die Ausbildung so getroffen ist, daß das Austrittsende des Abstichkanals der erkerförmigen Absticheinrichtung einen Deckel für die unter den Abstichkanal verfahrbare Pfanne trägt, welcher Deckel gemeinsam mit dem Konverter schwenkbar und von der Pfanne abhebbar ist. Dadurch, daß der Deckel der nachfolgenden Pfanne mit dem Konverter bzw. der erkerförmigen Absticheinrichtung verbunden ist, kann der Wechsel der Pfanne besonders rasch vorgenommen werden, wodurch das Verfahren nur sehr kurz unterbrochen wird.

Die Brenner des Konverters werden unter stöchiometrisch mit einem Sauerstoffmangel betrieben, welcher ein Sauerstoff-Brennstoff-Verhältnis $\lambda$ von 0,8 bis 0,9 ergibt. Die unverbrannten Teile des Erdgases, insbesondere CO und $CH_4$ steigen mit den Abgasen hoch und werden im Bereich der Sekundärluftzuführungsebene vollständig verbrannt. Gegenüber einem Schachtofen erlaubt die Verwendung eines Konverters die einfache Verschwenkung zum Wechsel der Pfanne und es läßt sich die erfindungsgemäße Einrichtung durch Umbau bestehender Konverter, beispielsweise durch Umbau von LD-Konvertern unmittelbar in die Praxis umsetzen. Gegenüber bekannten kippbaren Ofenkonstruktionen erlaubt die schwenkbare Aufhängung des Konverters eine wesentlich verbesserte Zugänglichkeit unterhalb des Konverters, wobei die umständlichen Manipulationen, wie sie im Zusammenhang mit am Boden von Konvertern angeordneten Abstichöffnungen erforderlich sind, bei der erkerförmigen Absticheinrichtung mit integrierten Brennern, vermieden werden.

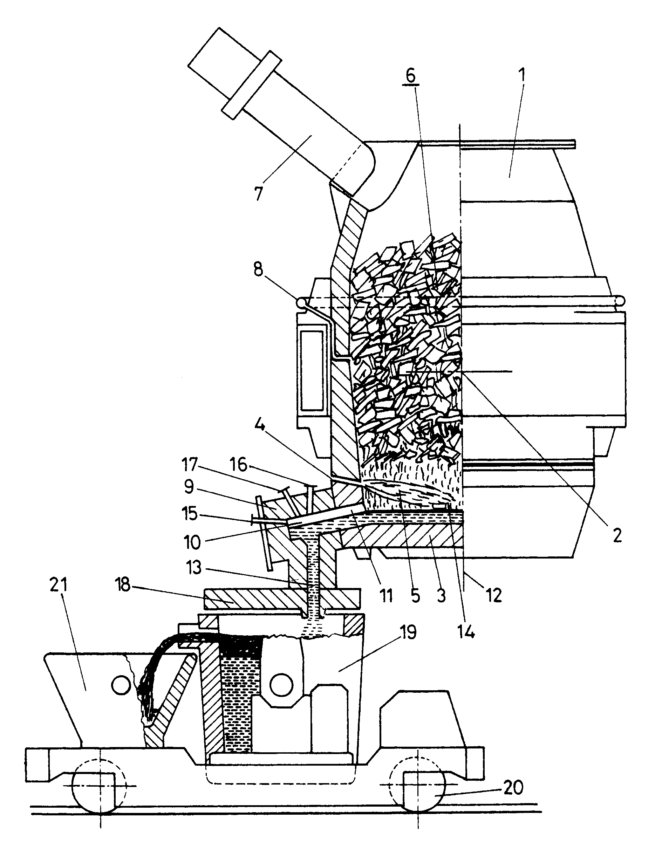

Die Erfindung wird nachfolgend an Hand eines in der Zeichnung schematisch dargestellten Ausführungsbeispieles näher erläutert.

In der Zeichnung ist ein schwenkbarer Konverter 1 dargestellt, dessen Schwenkachse mit 2 bezeichnet ist. An den Konverter sind nahe dem Konverterboden 3 über eine Ringleitung radial gerichtete Erdgasbrenner 4 angeschlossen, deren Flammen 5 im wesentlichen radial in das Innere des Konverters gerichtet sind. Der Konverter 1 kann kontinuierlich mit Schrott 6 beschickt werden, wofür eine Aufgabeschurre 7 vorgesehen ist.

Oberhalb der von den Brennern 4 gebildeten Brennerebene befindet sich eine weitere Ringleitung 8 für die Zufuhr von Sekundärluft. Da die Brenner 4 mit einem λ von 0,8 bis 0,9 unterstöchiometrisch betrieben werden, erfolgt in der Sekundärluftebene eine vollständige Verbrennung der eingeführten Brennstoffe.

An den Konverterboden 3 ist eine erkerförmige Absticheinrichtung 9 angeschlossen, welche einen im wesentlichen radialen Kanal 10 aufweist. Dieser radiale Kanal 10 der erkerförmigen Absticheinrichtung 9 fluchtet mit einer radialen Abstichöffnung 11 des Konverters 1 und geht in einem im wesentlichen vertikalen zur Achse 12 des Konverters 1 parallelen Kanal 13 über. Der im wesentlichen radiale Kanal 10 weist einen größeren lichten Querschnitt auf als der zur Achse 12 parallele Abstichkanal 13, so daß für einen Abfluß des Schmelzbades der radiale Kanal 10 nicht vollständig gefüllt sein muß. Mit Vorteil befindet sich oberhalb der abfließenden Schmelze 14 ein freier Raum, in welchen Brenner 15 und 16 münden, deren Brennerachsen einander schneiden. Der Brenner 15 dient hiebei der Aufheizung des radialen Kanales 10, wohingegen der Brenner 16 eine Verstopfung des vertikalen Kanales 13 durch Erstarren von Metall verhindert.

An den radialen Kanal 10 ist noch eine Probenahmeöffnung 17 angeschlossen, über welche das Schmelzverfahren kontrolliert werden kann.

Mit der erkerförmigen Absticheinrichtung 9 ist ein Deckel 18 verbunden, welcher gemeinsam mit dem Konverter 1 und der erkerförmigen Abstichöffnung 9 um die Schwenkachse 2 hochgeschwenkt werden kann, wenn die darunter gefahrene Pfanne 19 ausgetauscht werden soll. Die Pfanne 19 selbst ist auf Rollen 20 verfahrbar und für eine Schlackenseparation ist ein gesondertes Schlackenauffanggefäß 21 am Fahrwerk der Pfanne 19 festgelegt.

## Patentansprüche

1. Verfahren zum kontinuierlichen Schmelzen von Schrott und/oder Roheisen in einem Konverter, wobei der Konverter (1) nahe dem Boden (3) mit unterstöchiometrischen betribenen Brennern (4), deren Flammen im wesentlichen radial in das Innere des Konverters gerichtet sind, beheizt wird und wobei die Schmelze über eine seitlich an den Konverter (1) angeschlossene Absticheinrichtung (9) gegebenenfalls gemeinsam mit Schlacke ausgetragen wird, dadurch gekennzeichnet, daß in Abstand oberhalb der Brennerebene Sekundärluft oder $O_2$ zur vollständigen Verbrennung zugeführt wird, und daß der Konverter (1) zum Wechsel von fahrbaren Pfannen (19), in welche die Schmelze ausgetragen wird, in eine Lage verschwenkt wird, in welcher der Schmelzespiegel unterhalb der Abstichöffnung liegt.

2. Vorrichtung zur Durchführung des Verfahrens nach Anspruch 1, mit einem Konverter, wobei an den Konverter (1) in einer Ebene nahe dem Konverterboden (3) eine Mehrzahl von im wesentlichen radial gerichteten Brennerdüsen angeordnet ist, dadurch gekennzeichnet, daß in einer weiteren, darüber liegenden Ebene Luftdüsen angeordnet sind und daß an den Konverter (1) über eine radiale Abstichöffnung eine erkerförmige Absticheinrichtung (9) angeschlossen ist.

3. Vorrichtung nach Anspruch 2, dadurch gekennzeichnet, daß die erkerförmige Absticheinrichtung (9) einen im wesentlichen radialen Kanal (10) aufweist, welcher mit der radialen Abstichöffnung des Konverters fluchtet und daß an den im wesentlichen radialen Kanal (10) ein zur Achse (12) des Konverters (1) im wesentlichen paralleler Abstichkanal (13) angeschlossen ist.

4. Vorrichtung nach Anspruch 2 oder 3, dadurch gekennzeichnet, daß die erkerförmige Absticheinrichtung (9) wenigstens einen Brenner (15,16) aufweist, dessen Flamme in jeweils einen der beiden Kanäle (10,13) der Absticheinrichtung (9) mündet.

5. Vorrichtung nach einem der Ansprüche 2 bis 4, dadurch gekennzeichnet, daß der an die radiale Abstichöffnung angeschlossene Kanal (10) der Absticheinrichtung (9) einen größeren lichten querschnitt aufweist als der zur Achse des Konverters (1) parallele Kanal (13) der Absticheinrichtung (9).

6. Vorrichtung nach einem der Ansprüche 2 bis 5, dadurch gekennzeichnet, daß an den an die radiale Abstichöffnung angeschlossenen Kanal (10) der Absticheinrichtung (9) zwei Brenner (15,16) mit einander kreuzenden oder schneidenden Flammachsen und eine verschließbare Probenahmeöffnung (17) angeschlossen sind.

7. Vorrichtung nach einem der Ansprüche 2 bis 6, dadurch gekennzeichnet, daß das Austrittsende des Abstichkanals der erkerförmigen Absticheinrichtung (9) einen Deckel (18) für die unter den Abstichkanal (9) verfahrbare Pfanne (19) trägt, welcher Deckel (18) gemeinsam mit dem Konverter (1) schwenkbar und von der Pfanne (19) abhebbar ist.

## Claims

1. A process for continuously melting scrap and/or pig iron in a converter, wherein the converter (1) is heated near its base (3) by means of burners (4) operated sub-stoichiometrically, the flames of which are directed substantially radially into the interior of the converter, and wherein the melt is discharged, together with slag if necessary, via a tapping device (9) attached to the side of the converter (1), characterised in that secondary air or $O_2$ is fed in for complete combustion at a distance above the plane of the burner, and that the converter (1) is swung into a position in which the melt level is below the discharge aperture for the replacement of movable ladles (19) into which the melt is discharged.

2. An installation for carrying out the process according to Claim 1, with a converter, wherein a multiplicity of substantially radially directed burner nozzles is disposed on the converter (1) in a plane close to the base (3) of the converter, characterised in that air nozzles are disposed in a further plane which lies above the former plane, and that a bay-shaped tapping device (9) is attached to the converter (1) via a radial discharge aperture.

3. An installation according to Claim 2, characterised in that the bay-shaped tapping device (9) has a substantially radial channel (10), which aligns with the radial discharge aperture of the converter, and that a discharge channel (13) substantially parallel to the axis (12) of the converter (1) is attached to the substantially radial channel (10).

4. An installation according to Claims 2 or 3, characterised in that the bay-shaped tapping device has at least one burner (15, 16), the flame of which discharges into one of the two channels (10, 13) of the tapping device (9).

5. An installation according to any one of Claims 2 to 4, characterised in that the channel (10) of the tapping device (9) which is attached to the radial discharge aperture has a larger clear cross-section than the channel (13) of the tapping device (9) which is parallel to the axis of the converter (1).

6. An installation according to any one of Claims 2 to 5, characterised in that two burners (15, 16) with flame axes which cross or intersect each other, and a sample aperture (17) which can be closed, are attached to the channel (10) of the tapping device (9) which attached to the radial discharge aperture.

7. An installation according to any of Claims 2 to 6, characterised in that the outlet end of the discharge channel of the bay-shaped tapping device (9) supports a cover (18) for the ladle (19) which can be swung under the discharge channel (9), which cover (18) can be swung jointly with the converter (1) and can be lifted from the ladle (19).

**Revendications**

1. Procédé de fusion continue de déchets et/ou de fonte brute dans un convertisseur, le convertisseur (1) étant chauffé près du fond (3) à l'aide de brûleurs (4) fonctionnant de manière sous-stoechiométrique dont les flammes sont orientées de manière sensiblement radiale vers l'intérieur du convertisseur, et le bain étant évacué, éventuellement en commun avec un laitier, au moyen d'un dispositif de percée (9) raccordé latéralement au convertisseur (1), caractérisé en ce que de l'air secondaire ou du $O_2$ est amené en vue d'une combustion complète à distance au-dessus du plan des brûleurs et en ce que le convertisseur (1) est abaissé, pour l'échange des poches mobiles (19) dans lesquelles le bain est sorti, vers une position dans laquelle le niveau de bain est situé au-dessous de l'ouverture de percée.

2. Dispositif de mise en oeuvre du procédé selon la revendication 1 comportant un convertisseur, plusieurs tuyères de brûleurs orientées de façon sensiblement radiale étant disposées dans un plan voisin du fond (3) du convertisseur, caractérisé en ce que des tuyères à air sont disposées dans un autre plan situé plus haut et en ce qu'un dispositif de percée (9) en saillie est raccordé au convertisseur (1) au moyen d'un orifice radial de percée.

3. Dispositif selon la revendication 2, caractérisé en ce que le dispositif de percée (9) en saillie présente un canal sensiblement radial (10) qui est aligné avec l'orifice de percée radial du convertisseur et en ce qu'un canal de percée (13) sensiblement parallèle à l'axe (12) du convertisseur (1) est raccordé au canal sensiblement radial (10).

4. Dispositif selon la revendication 2 ou 3, caractérisé en ce que l'orifice de percée (9) en saillie comporte au moins un brûleur (15, 16) dont la flamme débouche respectivement dans l'un des deux canaux (10, 13) du dispositif de percée (9).

5. Dispositif selon l'une des revendications 2 à 4, caractérisé en ce que le canal (10), raccordé à l'orifice radial de percée, du dispositif (9) de percée est d'une section transversale libre plus grande que le canal (13), parallèle à l'axe du convertisseur (1) du dispositif de percée (9).

6. Dispositif selon l'une des revendications 2 à 5, caractérisé en ce que deux brûleurs (15, 16) dont les axes de flammes se croisent ou se coupent, et un orifice (17) de prélèvement d'éprouvettes pouvant être fermé sont raccordés au canal (10), raccordé à l'orifice de percée radiale, du dispositif (9) de percée.

7. Dispositif selon l'une des revendications 2 à 6, caractérisé en ce que l'extrémité de sortie du canal de percée du dispositif (9) de percée en saillie porte un couvercle (18) pour la poche (19) mobile au-dessous du canal de percée (9), ce couvercle (18) pouvant pivoter en commun avec le convertisseur (11) et être soulevé de la poche (19).